# EUROPÄISCHE PATENTSCHRIFT

(11) **EP 2 220 404 B1**
(45) Veröffentlichungstag und Bekanntmachung des Hinweises auf die Patenterteilung: **18.03.2015**
(21) Anmeldenummer: 08862739.3
(22) Anmeldetag: 02.12.2008
(51) Int. Cl.: F16H 61/30

(54) **SERVOUNTERSTÜTZUNGSEINRICHTUNG FÜR KRAFTFAHRZEUG-WECHSELGETRIEBE**
SERVO-ASSISTED DEVICE FOR MOTOR VEHICLE SWITCHING GEARBOX
DISPOSITIF D'ASSISTANCE POUR BOITE DE VITESSES DE VEHICULE AUTOMOBILE

(30) Priorität: 18.12.2007 DE 102007055847
(43) Veröffentlichungstag der Anmeldung: 25.08.2010
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2008/066602
(87) Internationale Veröffentlichungsnummer: WO 2009/077324

(56) Entgegenhaltungen:
- DE-A1- 19 839 850
- DE-A1-102006 006 652

## Beschreibung

Die Erfindung betrifft eine Servounterstützungseinrichtung einer Schaltvorrichtung eines Kraftfahrzeuggetriebes nach der im Oberbegriff von Anspruch 1 näher definierten Art.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Es sind pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

In der DE 198 39 850 A1 wird eine Schaltvorrichtung mit einer Servounterstützungseinrichtung für ein Getriebe eines Kraftfahrzeugs offenbart. Eine Steuerstange der Servounterstützungseinrichtung ist axial verschiebbar innerhalb einer Kolbenstange vorgesehen und wirkt über ein Schaltgestänge mit einem Schalthebel zusammen. Die Kolbenstange der Servounterstützungseinrichtung wirkt mit Mitteln zum Schalten eines Zahnräderwechselgetriebes zusammen und weist eine Rastierung mit drei Vertiefungen auf, die zwei Gang-Ein-Positionen und einer dazwischenliegenden Neutral-Position entsprechen, zur sicheren Festlegung der jeweiligen Schaltposition des Getriebes.

Die DIE 10 2006 006 652 A1 offenbart eine Schaltvorrichtung gemäß dem Oberbegriff des unabhängigen Anspruch 1, mit einer Servounterstützungseinrichtung für ein Getriebe eines Fahrzeugs, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern.

In der Servounterstützungseinrichtung ist ein Ventil vorhanden, welches auf der Steuerstange angeordnete Betätigungskolben und Ventilschieber umfasst. Die Ventilschieber werden durch eine Ventilfeder axial auseinander gehalten und liegen je an einem Ventilsitz der Kolbenstange an. Durch die Betätigungskolben werden die Ventilschieber betätigt, wodurch sich diese vom Ventilsitz der Kolbenstange lösen und das Ventil öffnet.

Durch ein auf der Steuerstange der Servounterstützungseinrichtung angeordnetes Federelement wird der Schalthebel, welcher über das Schaltgestänge mit der Steuerstange der Servounterstützungseinrichtung und mit einer mechanischen Schnittstelle zur Überbrückung der Schaltvorrichtung zusammenwirkt, in einer Fahrzeugkabine nahezu spielfrei fixiert. Die Federkraft des Federelements darf hierbei nicht zu groß sein, da die Federkraft zusammen mit einer Ventilkraft der Servounterstützungseinrichtung die Auslösekraft der Servounterstützungseinrichtung, also den Beginn der Schaltkraftunterstützung, bestimmt. Unter der Ventilkraft wird hier eine aus der Ventilfederkraft und der pneumatischen Ventildruckkraft bestehende Kraft verstanden, wobei die pneumatische Ventildruckkraft auf die Ventilschieber wirkt. Eine Ausbildung der mechanischen Schnittstelle zur Überbrückung der Servounterstützungseinrichtung ist beispielsweise in der DE 198 40 052 A1 offenbart, auf welche hier verwiesen wird.

Ist die Servounterstützungseinrichtung dauernd mit der Vorratsluft beaufschlagt, bewirkt eine leichte Betätigung des Schalthebels lediglich, dass das auf der Steuerstange angeordnete Federelement, durch welches der Schalthebel fixiert wird, komprimiert wird und dass der Betätigungskolben an dem Ventilschieber der Servounterstützungseinrichtung zur Anlage kommt. Ab diesem Anlagepunkt wirkt zusätzlich zur Federkraft des Federelements auch die Ventilkraft der Handschaltkraft entgegen, wodurch nun eine deutlich größere Handschaltkraft benötigt wird, um den Schalthebel weiter zu bewegen.

Aus der DE 198 39 854 A1 ist eine Schaltvorrichtung mit Servounterstützungseinrichtung bekannt, bei der die zugeführte Druckluft mittels einer Reduziereinrichtung begrenzt bzw. unterbrochen werden kann. Beispielsweise kann die Druckluftzufuhr zur Servounterstützungseinrichtung unterbrochen werden, wenn sich das Getriebe in einer Gang-Ein-Position befindet und die Kupplung geschlossen ist. Wird die Druckluftzufuhr zur Servounterstützungseinrichtung unterbrochen, dann entfällt die pneumatische Ventildruckkraft und somit ein großer Teil der Anschlagwirkung des Ventils, da von der Ventilkraft dann nur noch die Ventilfederkraft wirksam ist. Dies hat zu Folge, dass der Schalthebel relativ weit über seine rastierte Gang-Ein-Position hinaus betätigt werden kann, maximal bis zur Wirksamkeit der mechanischen Überbrückung der Servounterstützungseinrichtung. In Verbindung mit Schaltanlagen welche eine hohe Reibung aufweisen, würde ein über die rastierte Gang-Ein-Position hinaus betätigter Schalthebel seine Position beibehalten, wenn er vom Fahrzeugführer wieder losgelassen wird. Der Schalthebel kann also, je nachdem wie weit dieser vom Fahrzeugführer bewegt wird, in einer Position zwischen der vorgesehenen rastierten Gang-Ein-Position und der mechanisch überbrückten Position stehen, wodurch keine eindeutige Stellung für die rastierte Gang-Ein-Position mehr vorhanden ist. Dies gilt sinngemäß auch für die rastierte Neutral-Position des Schalthebels. Unter der rastierten Gang-Ein-Position bzw. der rastierten Neutral-Postion des Schalthebels wird hier die Position des Schalthebels verstanden, welche dem Schalthebel zugeordnet ist, wenn sich die Schaltvorrichtung in einer entsprechenden Rastierung zur sicheren Festlegung der jeweiligen Schaltposition des Getriebes befindet. Die Rastierung kann beispielsweise durch eine Rastenkontur in der Kolbenstange der Servounterstützungseinrichtung und entsprechende Kugelrastenbolzen realisiert werden, wie dies beispielsweise in der DE 198 39 850 A1 offenbart ist.

Der vorliegenden Erfindung liegt die Aufgabe zugrunde, eine Servounterstützungseinrichtung einer Schaltvorrichtung eines Kraftfahrzeuggetriebes aufzuzeigen, mit welcher eine Positionierung des Schalthebels verbessert und mit welcher die Nachteile des Standes der Technik minimiert bzw. beseitigt werden können.

Die der Erfindung zugrunde liegende Aufgabe wird durch eine, auch die kennzeichnenden Merkmale des Hauptanspruchs aufweisende, gattungsgemäße Servounterstützungseinrichtung gelöst.

Eine Servounterstützungseinrichtung einer Schaltvorrichtung eines Kraftfahrzeuggetriebes umfasst eine Steuerstange, auf welche eine zu unterstützende Handschaltkraft wirkt. Des Weiteren umfasst die Servounterstützungseinrichtung eine Kolbenstange, welche mit Mitteln zum Schalten eines Zahnräderwechselgetriebes zusammenwirkt und wenigstens ein Federelement, das auf der Steuerstange und radial innerhalb der Kolbenstange angeordnet ist. Das Federelement ist erfindungsgemäß derart auf der Steuerstange der Servounterstützungseinrichtung angeordnet, dass in einer oder in beiden Betätigungsrichtungen der Steuerstange ein Spiel zwischen dem Federelement und der Kolbenstange vorhanden ist, wodurch die Steuerstange in der einen oder den beiden Betätigungsrichtungen um das Spiel bewegt werden kann, ohne dass das Federelement komprimiert wird. Das Federelement kann beispielsweise als Spiralfeder oder als Tellerfeder ausgebildet sein.

Das auf der Steuerstange der Servounterstützungseinrichtung angeordnete Federelement kann hierbei eine hohe Federkraft aufweisen, da das Federelement keine Auswirkung auf die Auslösekraft der Servounterstützungseinrichtung hat. Der Beginn der Schaltkraftunterstützung ist daher nicht mehr von dem Federelement abhängig, wodurch eine Reduzierung der Auslösekraft der Servounterstützungseinrichtung bewirkt wird. Das Federelement kann vorgespannt auf der Steuerstange angeordnet sein. Das Spiel zwischen dem Federelement und der Kolbenstange ist in einer oder in beiden Betätigungsrichtungen der Steuerstange so groß ausgebildet, dass ein Ventil der Servounterstützungseinrichtung betätigt wird, bevor das Spiel zwischen dem Federelement und der Kolbenstange überwunden ist. Dies bewirkt, dass das Ventil der Servounterstützungseinrichtung nach einem kurzen Betätigungsweg der Steuerstange geöffnet wird und sich die Steuerstange bei weiter steigender Handschaltkraft über das auf der Steuerstange angeordnete Federelement gegen die Kolbenstange der Servounterstützungseinrichtung abstützt, wodurch eine Anschlagwirkung zustande kommt, da für eine weitere Betätigung der Steuerstange das Federelement komprimiert werden muss.

In einer bevorzugten Ausführungsform der erfindungsgemäßen Servounterstützungseinrichtung ist das Federelement in axialer Richtung durch Anschlagelemente begrenzt und das Spiel zwischen dem Federelement und der Kolbenstange ist in einer oder in beiden Betätigungsrichtungen der Steuerstange durch die Anschlagelemente und Anschläge der Kolbenstange ausgebildet. Die Anschlagelemente können beispielsweise durch das Federelement und durch Anschläge auf der Steuerstange fixiert sein und die Anschläge der Kolbenstange können beispielsweise einteilig mit der Kolbenstange ausgebildet sein oder über Sicherungsringe realisiert werden.

Durch die erfindungsgemäße Servounterstützungseinrichtung kann das Problem der nicht eindeutigen Positionierung des Schalthebels gelöst und die Auslösekraft der Servounterstützungseinrichtung reduziert werden. Auch bei Schaltanlagen, welche eine hohe Reibung aufweisen, kann eine eindeutige Positionierung des Schalthebels erfolgen. Deshalb kann die erfindungsgemäße Servounterstützungseinrichtung sowohl bei Schaltanlagen, bei denen der Schalthebel über ein Schaltgestänge als auch bei Schaltanlagen, bei denen der Schalthebel über einen Kabelzug auf die Schaltvorrichtung wirkt, vorteilhaft Anwendung finden.

Die erfindungsgemäße Servounterstützungseinrichtung kann bevorzugt in Verbindung mit einer Schaltvorrichtung eines Kraftfahrzeuggetriebes verwendet werden. Die Schaltvorrichtung umfasst Mittel zum Wählen und zum Schalten von Gangstufen des Getriebes, wobei eine zu unterstützende Handschaltkraft auf eine Steuerstange der erfindungsgemäßen Servounterstützungseinrichtung wirkt. Durch die die erfindungsgemäß vorgeschlagene Servounterstützungseinrichtung umfassende Schaltvorrichtung ist somit eine genaue Positionierung eines Schalthebels der Schaltvorrichtung realisierbar. Durch die Reduzierung der Auslösekraft der Servounterstützungseinrichtung wird der Schaltkomfort der Schaltvorrichtung erhöht. Die zu unterstützende Handschaltkraft kann hierbei über ein Schaltgestänge oder einen Kabelzug oder hydraulisch auf die Steuerstange der Servounterstützungseinrichtung wirken.

In einer vorteilhaften Ausführungsform der Schaltvorrichtung mit Servounterstützungseinrichtung sind in der Schaltvorrichtung elastische Elemente vorgesehen, um die auf die Servounterstützungseinrichtung einwirkende Handschaltkraft vor und/oder während der Einleitung in die Servounterstützungseinrichtung zu verändern oder zu begrenzen. Eine Anordnung und Funktion der elastischen Elemente ist beispielsweise aus der DE 10 2006 006 651 A1 bekannt.

Die Schaltvorrichtung mit der erfindungsgemäßen Servounterstützungseinrichtung kann bevorzugt in einem Kraftfahrzeuggetriebe verwendet werden. Das die Schaltvorrichtung mit der erfindungsgemäßen Servounterstützungseinrichtung aufweisende Kraftfahrzeuggetriebe kann beispielsweise ein konventionelles Schaltgetriebe sein, welches über getriebeinterne Schaltelemente verfügt, welche mit der Schaltvorrichtung und somit mit der erfindungsgemäßen Servounterstützungseinrichtung in Verbindung stehen, zur Schaltung einer Gangstufe des Getriebes.

Im Folgenden wird das Grundprinzip der Erfindung, welche mehrere Ausführungsformen zulässt, an Hand einer Zeichnung beispielhaft näher erläutert.
Es zeigen:
- Fig. 1: eine Schaltanlage nach dem Stand der Technik,
- Fig. 2: einen Teil einer Ausführungsform der Servounterstützungseinrichtung in Schnittdarstellung und
- Fig. 3: ein Kennlinien-Diagramm.

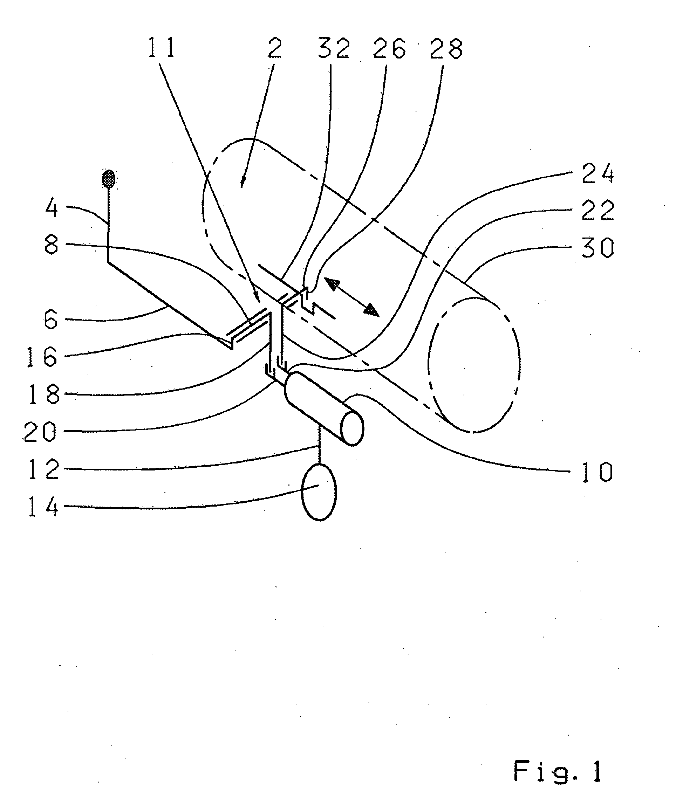

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

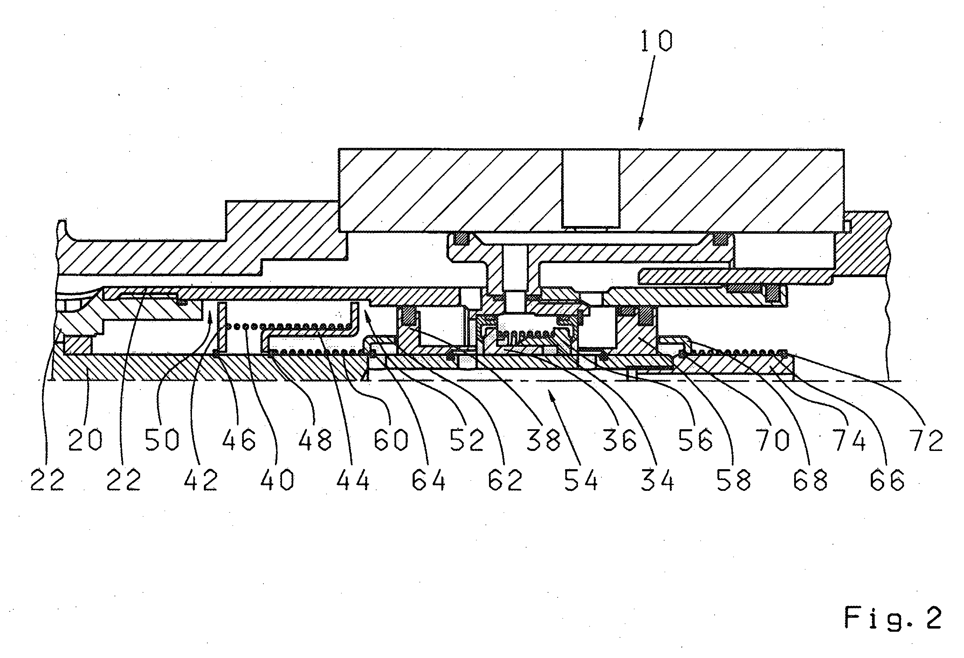

Die Fig. 2 zeigt einen Ausschnitt aus der Servounterstützungseinrichtung 10 in einer erfindungsgemäßen Ausgestaltung. Die Servounterstützungseinrichtung 10 umfasst eine Steuerstange 20, eine Kolbenstange 22 und ein Federelement 40, welches die Steuerstange 20 radial umgibt und radial innerhalb der Kolbenstange 22 angeordnet ist. Die Steuerstange 20 der Servounterstützungseinrichtung 10 ist axial verschiebbar innerhalb der Kolbenstange 22 angeordnet und wirkt über ein Schaltgestänge mit einem Schalthebel zusammen (siehe Fig. 1). Die Kolbenstange 22 wirkt mit Mitteln zum Schalten des Zahnräderwechselgetriebes zusammen (siehe Fig. 1). Ein Federelement 60 umgibt die Steuerstange 20 radial und wirkt in axialer Richtung mit einem Anschlag 48 und einem Anschlagelement 62 zusammen. Der Anschlag 48 ist an der Steuerstange 20 befestigt. Das Anschlagelement 62 liegt an einem Anschlag 64 an der Steuerstange 20 an. An der Steuerstange 20 ist hier eine Verlängerung 74 vorgesehen. Auf der Verlängerung 74 ist ein weiteres Federelement 66 angeordnet, das zwischen einem Anschlagelement 68 und einem auf der Verlängerung 74 fest angeordneten Anschlag 72 eingeschlossen ist. Das Anschlagelement 68 liegt an einem weiteren fest auf der Verlängerung 74 befestigten Anschlag 70 axial an. Ein Ventil 54 umfasst Betätigungskolben 38, 58 und Ventilschieber 36, 56. Die Betätigungskolben 38, 58 und die Ventilschieber 36, 56 sind axial verschiebbar auf der Steuerstange 20 angeordnet. Die Ventilschieber 36, 56 werden durch ein Federelement 34 axial auseinander gehalten und liegen je an einem Ventilsitz der Kolbenstange 22 an. Erfindungsgemäß ist das Federelement 40 derart auf der Steuerstange 20 angeordnet, dass in beiden Betätigungsrichtungen der Steuerstange ein Spiel 50, 52 zwischen dem Federelement 40 und der Kolbenstange 22 vorherrscht. Die Federelemente 34, 40, 60, 66 sind hier als Spiralfedern und die Anschläge 46, 48, 64, 70, 72 als Sicherungsringe ausgebildet. Die Spiralfeder 40 wird in axialer Richtung durch Anschlagelemente 42, 44 begrenzt. Die Spiralfedern 40, 60 können unterschiedliche Federraten bzw. Elastizitäten aufweisen. Ebenfalls ist es möglich, dass die Spiralfedern 40, 60 zusammen oder einzeln vorgespannt sind. Das Spiel 50, 52 zwischen der Spiralfeder 40 und der Kolbenstange 22 ist in beiden Betätigungsrichtungen der Steuerstange 20 durch die Anschlagelemente 42, 44 und Anschläge der Kolbenstange 22 ausgebildet. Die Anschlagelemente 42, 44 werden hier durch das Federelement 40 und durch Anschläge 46, 48 auf der Steuerstange 20 fixiert und die Anschläge der Kolbenstange 22 sind hier einteilig mit der Kolbenstange 22 ausgebildet.

Wird die Steuerstange 20 aufgrund einer Handschaltkraft in der Zeichenblattebene nach rechts bewegt, so wird auch der auf der Steuerstange 20 angeordnete Betätigungskolben 38 nach rechts bewegt. Durch den Betätigungskolben 38 wird der Ventilschieber 36 betätigt, bevor das Anschlagelement 44 am Anschlag der Kolbenstange 22 anliegt. Der Ventilschieber 36 löst sich vom Ventilsitz der Kolbenstange 22 und das Ventil 54 wird geöffnet. Das geöffnete Ventil 54 regelt mittels eines vorhandenen Vorratdrucks einen Servodruck entsprechend zur vorherrschenden Steuerstangenkraft bzw. Handschaltkraft ein. Wird nun die Steuerstange 20 durch Erhöhen der Handschaltkraft weiter nach rechts bewegt, so bleibt der Betätigungskolben 38 und der Ventilschieber 36 auf Grund des erreichten Kräftegleichgewichts auf ihren zuvor erreichten geöffneten Positionen stehen, während sich die Steuerstange 20 relativ zu diesen beiden weiterbewegt und die Spiralfeder 60 zwischen Anschlag 48 und Anschlagelement 62 weiter komprimiert wird, bis das Anschlagelement 44 an dem Anschlag der Kolbenstange 22 zur Anlage kommt. Liegt das Anschlagelement 44 an dem Anschlag der Kolbenstange an, dann wird eine noch höhere Handschaltkraft benötigt, um die Steuerstange 20 weiter nach rechts zu bewegen, da nun auch die Federkraft des Federelements 40 überwunden werden muss.

Die Spiralfeder 40 wird nun durch Erhöhen der Handschaltkraft komprimiert. Wird dann die Druckluftzufuhr zur Servounterstützungseinrichtung unterbrochen und der Schalthebel 4 (siehe Fig. 1) über seine rastierte Gang-Ein-Position hinaus betätigt, so wird der über seine rastierte Gang-Ein-Position hinaus betätigte Schalthebel 4 auch bei Schaltanlagen mit hoher Reibung durch die Federkraft des Federelements 40 wieder in Richtung seiner rastierten Gang-Ein-Position positioniert, so dass der Schalthebel 4 nur noch um das seitliche Spiel 50, 52 von dieser entfernt ist. Das Federelement kann entsprechend der Reibung der Schaltanlage ausgelegt werden.

Analoges gilt für eine Betätigung der Steuerstange 20 in der Zeichenblattebene nach links.

Durch die erfindungsgemäße Servounterstützungseinrichtung 10 kann eine Reduzierung der Auslösekraft bewirkt werden, da das Ventil 54 bereits geöffnet wird, bevor das Federelement 40 komprimiert wird. Dies ist ebenfalls bei Schaltanlagen mit hoher Reibung von Vorteil. Unter der Auslösekraft wird hier die aufzubringende Handschaltkraft verstanden, die benötigt wird um das Ventil 54 der Servounterstützungseinrichtung 10 zu öffnen.

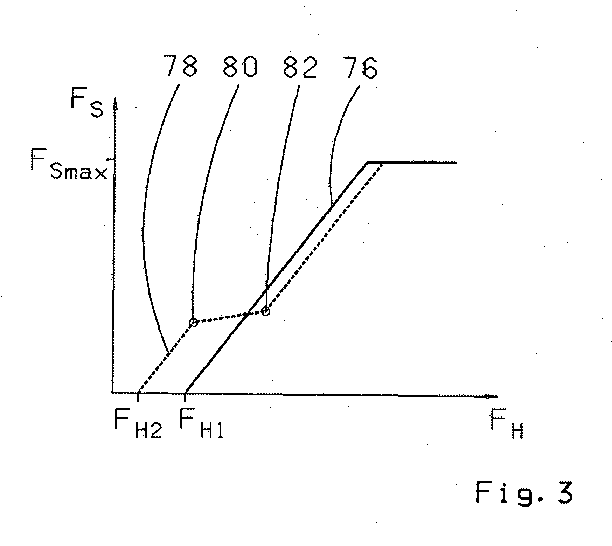

Die Fig. 3 zeigt ein Kennlinien-Diagramm, in welchem die Servounterstützungskraft F_{S} als Funktion der Handschaltkraft F_{H} dargestellt ist. Bei der erfindungsgemäßen Servounterstützungseinrichtung 10 ist die Auslösekraft F_{H2} geringer als die Auslösekraft F_{H1} einer aus dem Stand der Technik bekannten Servounterstützungseinrichtung. Die durch die Servounterstützungseinrichtung 10 realisierbare Kennlinie 78 ist somit zu der aus dem Stand der Technik bekannten Kennlinie 76 parallel verschoben, wodurch im Anfangsbereich der Kennlinie 78 bei gleicher Handschaltkraft F_{H} eine höhere Servounterstützungskraft F_{S} erreicht wird.

Die Kennlinie 78 weist einen Bereich zwischen zwei Knickpunkten 80, 82 auf, welcher einen nahezu waagrechten Verlauf aufweist. Der Knickpunkt 80 entsteht, wenn das Anschlagelement 44 an dem Anschlag der Kolbenstange 22 zur Anlage kommt. In dem Bereich zwischen den beiden Knickpunkten 80, 62 muss erst die Federkraft des Federelements 40 überwunden werden, bevor das Ventil 54 weiter öffnen kann, wodurch hier im Verhältnis zur Handschaltkraft F_{H} eine nur geringe Servounterstützungskraft F_{S} erzeugt wird. Ab dem Knickpunkt 82 werden dann beide Federelemente 40, 60 komprimiert, wodurch die Kennlinie 78 bis zur maximalen Servounterstützungskraft F_{Smax} einen stetig steigenden Verlauf aufweist. Durch eine entsprechende Auslegung des Federelements 40, beispielsweise über die Federkonstante oder durch eine vorgespannte Anordnung des Federelements 40, kann der Bereich zwischen den beiden Knickpunkten 80, 82 entsprechend variiert werden. Die Handschaltkraft F_{H}, bei welcher der erste Knickpunkt 80 entsteht, ist somit abhängig von der Federkraft des Federelements 60, während der zweite Knickpunkt 82 in Abhängigkeit der Federkraft des Federelements 40 entsteht.

Somit kann schon bei geringer Handschaltkraft F_{H} eine bestimmte Servounterstützungskraft F_{S} erzielt werden, wobei dann ab einer bestimmten Höhe der Handschaltkraft F_{H} für einen bestimmten Bereich eine nahezu gleichbleibende Servounterstützungskraft F_{S} und anschließend bei noch höhere Handschaltkraft F_{H} wieder eine ansteigende Servounterstützungskraft F_{S} erzielbar ist. Hier ist die Federkraft des Federelements 40 derart gewählt, dass der Bereich zwischen den beiden Knickpunkten 80, 82 nahezu waagrecht verläuft und die Kennlinie 78 soweit nach rechts verschoben wird, dass in dem Bereich zwischen dem Knickpunkt 82 und der maximalen Servounterstützungskraft F_{Smax} im Vergleich zur Kennlinie 76 bei gleicher Handschaltkraft F_{H} weniger Servounterstützungskraft F_{S} erzeugt wird.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 34: Federelement
- 36: Ventilschieber
- 38: Betätigungskolben
- 40: Federelement
- 42: Anschlagelement
- 44: Anschlagelement
- 46: Anschlag
- 48: Anschlag
- 50: Spiel
- 52: Spiel
- 54: Ventil
- 56: Ventilschieber
- 58: Betätigungskolben
- 60: Federelement
- 62: Anschlagelement
- 64: Anschlag
- 66: Federelement
- 68: Anschlagelement
- 70: Anschlag
- 72: Anschlag
- 74: Verlängerung
- 76: Kennlinie nach dem Stand der Technik
- 78: Kennlinie
- 80: Knickpunkt
- 82: Knickpunkt

- F_{H}: Handschaltkraft
- F_{S}: Servounterstützungskraft
- F_{H1}: Auslösekraft nach dem Stand der Technik
- F_{H2}: Auslösekraft
- F_{Smax}: maximale Servounterstützungskraft

## Patentansprüche

1. Servounterstützungseinrichtung (10) einer Schaltvorrichtung (11) eines Kraftfahrzeuggetriebes, umfassend eine Steuerstange (20), auf welche eine zu unterstützende Handschaltkraft wirkt, eine Kolbenstange (22) und wenigstens ein Federelement (40), das auf der Steuerstange (20) und radial innerhalb der Kolbenstange (22) angeordnet ist, **dadurch gekennzeichnet, dass** das Federelement (40) derart auf der Steuerstange (20) angeordnet ist, dass in einer oder in beiden Betätigungsrichtungen der Steuerstange (20) ein Spiel (50, 52) zwischen dem Federelement (40) und der Kolbenstange (22) vorhanden ist.

2. Servounterstützungseinrichtung (10) nach Anspruch 1, **dadurch gekennzeichnet, dass** das Spiel (50, 52) zwischen dem Federelement (40) und der Kolbenstange (22) in einer oder in beiden Betätigungsrichtungen der Steuerstange (20) so groß ausgebildet ist, dass ein Ventil (54) der Servounterstützungseinrichtung (10) betätigt wird, bevor das Spiel (50, 52) überwunden ist.

3. Servounterstützungseinrichtung (10) nach Anspruch 1 oder 2, **dadurch gekennzeichnet, dass** das Federelement (40) in axialer Richtung durch Anschlagelemente (42,44) begrenzt ist und dass das Spiel (50, 52) in einer oder in beiden Betätigungsrichtungen der Steuerstange (20) durch die Anschlagelemente (42, 44) und Anschläge der Kolbenstange (22) ausgebildet ist.

4. Servounterstützungseinrichtung (10) nach Anspruch 3, **dadurch gekennzeichnet, dass** die Anschlagelemente (42, 44) durch das Federelement (40) und durch Anschläge (46, 48) auf der Steuerstange (20) fixiert sind.

5. Servounterstützungseinrichtung (10) nach wenigstens einem der Ansprüche 1 bis 4, **dadurch gekennzeichnet, dass** das Federelement (40) als Spiralfeder oder als Tellerfeder ausgebildet ist.

6. Schaltvorrichtung (11) eines Kraftfahrzeuggetriebes mit einer Servounterstützungseinrichtung (10) nach wenigstens einem der vorangegangenen Ansprüche.

7. Kraftfahrzeuggetriebe mit einer Schaltvorrichtung (11) nach Anspruch 6.

## Claims

1. Servo-assistance device (10) of a gear shift device (11) of a motor vehicle transmission, including a control rod (20) on which acts a manual shifting force to be assisted, a piston rod (22) and at least one spring element (40) which is arranged on the control rod (20) and radially inside the piston rod (22), **characterized in that** the spring element (40) is arranged on the control rod (20) in such a manner that a play (50, 52) is present between the spring element (40) and the piston rod (22) in one or both operating directions of the control rod (20).

2. Servo-assistance device (10) according to Claim 1, **characterized in that** the play (50, 52) between the spring element (40) and the piston rod (22) is configured sufficiently large, in one or both operating directions of the control rod (20), for a valve (54) of the servo-assistance device (10) to be actuated before the play (50, 52) has been fully traversed.

3. Servo-assistance device (10) according to Claim 1 or 2, **characterized in that** the spring element (40) is limited in the axial direction by stop elements (42, 44), and **in that** the play (50, 52) is defined in one or both operating directions of the control rod (20) by the stop elements (42, 44) and stops of the piston rod (22).

4. Servo-assistance device (10) according to Claim 3, **characterized in that** the stop elements (42, 44) are fixed by the spring element (40) and by stops (46, 48) on the control rod (20).

5. Servo-assistance device (10) according to at least one of Claims 1 to 4, **characterized in that** the spring element (40) is in the form of a spiral spring or a disk spring.

6. Gear shift device (11) of a motor vehicle transmission with a servo-assistance device (10) according to at least one of the preceding claims.

7. Motor vehicle transmission with a gear shift device (11) according to Claim 6.

## Revendications

1. Dispositif d'assistance par asservissement (10) pour un dispositif de changement de vitesses (11) d'une transmission de véhicule automobile, comprenant une tige de commande (20) sur laquelle agit une force de changement de vitesse manuelle nécessitant l'assistance, une tige de piston (22) et au moins un élément de ressort (40) qui est disposé sur la tige de commande (20) et radialement à l'intérieur de la tige de piston (22), **caractérisé en ce que** l'élément de ressort (40) est disposé sur la tige de commande (20) de telle sorte que dans un ou dans les deux sens d'actionnement de la tige de commande (20), il existe un jeu (50, 52) entre l'élément de ressort (40) et la tige de piston (22).

2. Dispositif d'assistance par asservissement (10) selon la revendication 1, **caractérisé en ce que** le jeu (50, 52) entre l'élément de ressort (40) et la tige de piston (22), dans un ou dans les deux sens d'actionnement de la tige de commande (20), est suffisamment grand pour qu'une soupape (54) du dispositif d'assistance par asservissement (10) soit actionnée avant que le jeu (50, 52) ne soit surmonté.

3. Dispositif d'assistance par asservissement (10) selon la revendication 1 ou 2, **caractérisé en ce que** l'élément de ressort (40) est limité dans la direction axiale par des éléments de butée (42, 44), et **en ce que** le jeu (50, 52), dans un ou dans les deux sens d'actionnement de la tige de commande (20), est réalisé par les éléments de butée (42, 44) et des butées de la tige de piston (22).

4. Dispositif d'assistance par asservissement (10) selon la revendication 3, **caractérisé en ce que** les éléments de butée (42, 44) sont fixés par l'élément de ressort (40) et par des butées (46, 48) sur la tige de commande (20).

5. Dispositif d'assistance par asservissement (10) selon au moins l'une quelconque des revendications 1 à 4, **caractérisé en ce que** l'élément de ressort (40) est réalisé sous forme de ressort spiral ou sous forme de ressort Belleville.

6. Dispositif de changement de vitesses (11) d'une transmission de véhicule automobile, comprenant un dispositif d'assistance par asservissement (10) selon au moins l'une quelconque des revendications précédentes.

7. Transmission de véhicule automobile comprenant un dispositif de changement de vitesses (11) selon la revendication 6.
